# EUROPEAN PATENT APPLICATION

(11) **EP 4 503 432 A1**
(43) Date of publication of application: **05.02.2025**
(21) Application number: 23860844.2
(22) Date of filing: 29.08.2023
(51) Int. Cl.: H02S 50/00, H02S 40/32, H02S 40/38, H02J 9/06, H02J 7/35, H02J 3/38, H02J 3/14, H02J 3/00

(54) **BACKUP DEVICE, PHOTOVOLTAIC POWER GENERATION SYSTEM COMPRISING SAME, AND BACKUP METHOD OF PHOTOVOLTAIC POWER GENERATION SYSTEM**

(30) Priority: 02.09.2022 KR 20220111418; 19.07.2023 KR 20230093897; 21.08.2023 KR 20230109272
(71) Applicant: Hanwha Solutions Corporation, Jung-gu Seoul 04541 (KR)
(72) Inventor: LEE, Joonmin, Seoul 04541 (KR); LIM, Kyung Bae, Seoul 04541 (KR); MIN, Joon Hong, Seoul 04541 (KR); HWANG, Uiseon, Seoul 04541 (KR); LEE, Sang Hoon, Seoul 04541 (KR); PARK, Sung Youl, Seoul 04541 (KR); PARK, Mingi, Seoul 04541 (KR)
(74) Representative: Mooser, Sebastian Thomas
(86) International application number: PCT/KR2023/012801
(87) International publication number: WO 2024/049168

(57) **Abstract**

A photovoltaic system according to an embodiment of the present disclosure includes an energy storage system (ESS) that is communicatively connected and controllable, at least one distributed energy resource (DER) that is optionally connected, and a backup device configured to control a supply and backup of power to a load connected thereto, wherein the backup device may include a main relay, a load relay, and a processor configured to control the main relay and the load relay to perform the on- or off-operation based on at least one of whether the power grid is interconnected, and an available output power and a charging state of the energy storage system, and control at least one of the power grid, the energy storage system, and the distributed energy resource to supply power to the load based on the operations of the main relay and the load relay.

## Description

### Technical Field

The present disclosure relates to a backup device, a photovoltaic system including the same, and a method for backing up the photovoltaic system.

### Background Art

In general, a photovoltaic system is a system that uses photovoltaic cells to convert solar energy into electrical energy and transmit the electrical energy to a commercial power grid, and this process does not cause environmental pollution and allows the photovoltaic system to be used semi-permanently.

When the photovoltaic system is interconnected with a power grid, the photovoltaic system may supply power to a load and the power grid through photovoltaic modules or batteries, or supply power to the load in conjunction with the power grid, depending on the status of electricity generation and the amount of power of the photovoltaic modules.

For example, during daytime, when the photovoltaic modules generate sufficient power, the photovoltaic system can supply power to the load and supply any excess power to the power grid. In addition, during nighttime, when the photovoltaic modules do not generate sufficient power, the photovoltaic system can supply power to the load in conjunction with the power grid, or power may be directly supplied from the power grid.

However, when the power grid is disconnected due to a blackout or the like, and the photovoltaic modules do not generate sufficient power while an energy storage system such as a battery is not equipped, there is an issue in which the photovoltaic system cannot supply power to the load. In addition, when capacity expansion is needed, the system cannot be configured flexibly, and maintaining flexible compatibility with the communication system is difficult. Thus, cooperative operation with a power conditioning system (PCS) for stable load response requires fundamentally changing the entire system configuration, which is a significant drawback.

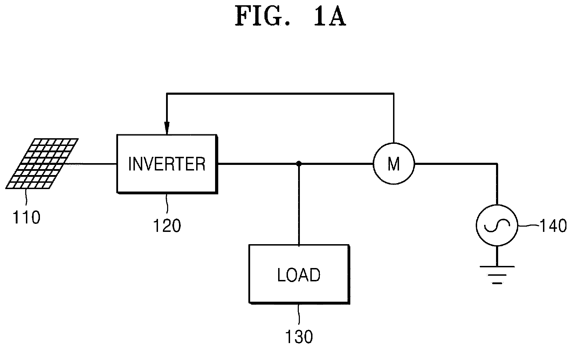

FIG. 1A is a configuration diagram of a conventional photovoltaic system.

Referring to FIG. 1A, the conventional photovoltaic system may include a photovoltaic module 110, an inverter 120 that transmits energy produced by the photovoltaic module 110 to a load 130 and a power grid 140, and the load 130 that uses power produced by the photovoltaic module 110.

In such a conventional configuration, when a power outage occurs in the power grid and the photovoltaic module 110 does not generate sufficient power, there is an issue in which the load that must essentially receive power cannot be supplied with power. Accordingly, there is a need to develop technology that can reliably supply power to a load for which power supply is essential even in situations in which there is a power outage or insufficient power supply.

In addition, in the conventional photovoltaic system configuration, there was an issue in that when capacity expansion was needed, the system could not be configured flexibly, and maintaining flexible compatibility with the communication system was difficult.

Accordingly, there is a need to develop technology that can reliably supply power to a load without complex communication or control matching in situations in which there is a power outage or insufficient power supply.

### Description

### Technical Problem

The present disclosure is directed to providing a backup device capable of reliably backing up power supply to a load regardless of interconnection with a power grid, a photovoltaic system including the same, and a method for backing up the photovoltaic system.

The present disclosure is also directed to providing a backup device capable of backing up power supply to a load by utilizing various distributed energy resources (DERs) connected in parallel with a communicable and controllable photovoltaic energy storage system (ESS), a photovoltaic system including the same, and a method for backing up the photovoltaic system.

The present disclosure is also directed to providing a backup device capable of reliably backing up power supply to a load that must essentially receive power from a photovoltaic system even in situations in which there is a power outage or a photovoltaic module generates insufficient power, a photovoltaic system including the same, and a method for backing up the photovoltaic system.

The present disclosure is also directed to establishing a communication system with flexible compatibility that allows a plurality of different systems to be used for capacity expansion.

### Technical Solution

According to an aspect of the present invention, there is provided a photovoltaic system including an energy storage system (ESS) that is communicatively connected and controllable, at least one distributed energy resource (DER) that is optionally connected, and a backup device configured to control a supply and backup of power to a load connected thereto, wherein the backup device may include a main relay disposed between a power grid and a load and configured to perform an on- or off-operation, a load relay disposed between the energy storage system and the load and configured to perform an on- or off-operation, and a processor configured to control the main relay and the load relay to perform the on- or off-operation based on at least one of whether the power grid is interconnected, and an available output power and a charging state of the energy storage system, and control at least one of the power grid, the energy storage system, and the distributed energy resource to supply power to the load based on the operations of the main relay and the load relay.

The processor may be further configured to control the main relay to perform the off-operation based on the power grid not being interconnected, and control the energy storage system to supply power to the load when a charge amount of the energy storage system is greater than an amount of charge energy insufficient for continuous supply to the load.

The processor may be further configured to determine whether to limit power generation of the energy storage system based on a voltage of the load and a reference voltage of the energy storage system.

The backup device may further include a first switch configured to selectively connect the distributed energy resource to the energy storage system, wherein the processor may be further configured to control the first switch to perform an on- or off-operation based on the voltage of the load and the reference voltage of the distributed energy resource, in response to limiting the power generation of the energy storage system.

The processor may be further configured to preemptively prevent an abnormal off-grid operation by stopping only a power generation operation of the energy storage system, which is dedicated to responding to the load, when the charge amount of the energy storage system is less than or equal to the amount of charge energy insufficient for continuous supply to the load.

The backup device may further include a generator, and a second switch that is configured to connect the load to the generator and operates complementarily with the main relay, wherein the processor may be further configured to identify whether the energy storage system supports a daylight backup function, and, based on the daylight backup function not being supported, control the load relay to perform the off-operation and the second switch to perform the on-operation, thereby allowing the generator to supply power to the load.

The processor may be further configured to identify whether the daylight backup function is performable when the daylight backup function is supported, control the energy storage system to perform the daylight backup operation based on the backup function being performable, and control the load relay to perform the off-operation and the second switch to perform the on-operation based on the backup function not being performable, thereby allowing the generator to supply power to the load.

The backup device may further include a generator, and a second switch that is configured to connect the load to the generator and operates complementarily with the main relay, wherein the processor may be further configured to control the main relay to perform the off-operation based on the energy storage system not being connected and the power grid not being in an interconnection condition, and control the load relay to perform the off-operation and the second switch to perform the on-operation, so that the generator supplies power to the load.

The processor may be further configured to control so that at least one of the power grid and the distributed energy resource supplies power to the load based on the energy storage system not being connected.

The energy storage system may include an inverter configured to convert direct current (DC) power produced by a photovoltaic module into alternating current (AC) power, and a power storage device configured to store at least a portion of the AC power output from the inverter.

The power storage device may include a DC-AC power converter.

The photovoltaic system may further include a sensor unit configured to determine a connection state between the load and the power grid.

According to an aspect of the present invention, there is provided a backup device including a main relay disposed between a power grid and a load and configured to perform an on- or off-operation, a load relay disposed between the energy storage system and the load and configured to perform an on- or off-operation, and a processor configured to control the main relay and the load relay to perform the on- or off-operation based on at least one of whether the power grid is interconnected, and an available output power and a charging state of the energy storage system, and control at least one of the power grid, the energy storage system, and the distributed energy resource to supply power to the load based on the operations of the main relay and the load relay.

The load may include a first load disposed between the main relay and the power grid, and a second load disposed between the main relay and the energy storage system.

The backup device may further include a transformer configured to adjust a magnitude of a voltage applied to the load based on the power grid not being interconnected.

According to an aspect of the present invention, there is provided a photovoltaic system including a photovoltaic module configured to produce power, an energy storage system (ESS) that is communicatively connected and controllable, a load that receives power from at least one of the energy storage system and a power grid, and a backup device configured to control a supply and backup of power to a load connected thereto, wherein the energy storage system includes an inverter configured to convert direct current (DC) power produced by the photovoltaic module into alternating current (AC) power, a power storage device configured to store at least a portion of the AC power output from the inverter, and a first control unit configured to communicate with a server based on data received from at least one of the inverter and the power storage device, and the backup device includes a main relay disposed between a power grid and a load and configured to perform an on- or off-operation based on whether the power grid is interconnected, a load relay disposed between an energy storage system, which is communicatively connected and controllable, and the load and configured to perform an on- or off-operation, and a second control unit configured to control the main relay and the load relay to perform the on- or off-operation, and control at least one of the power grid and the energy storage system to supply power to the load based on the operations of the main relay and the load relay.

### Advantageous Effects

According to an embodiment of the present disclosure, by parallel control of communicable energy storage systems and non-communicable distributed energy resources, a photovoltaic system can be expanded and can more reliably back up power supply to a load without using complex control or communication.

According to an embodiment of the present disclosure, a photovoltaic system can be configured flexibly and offers efficiency and economic feasibility in utilizing surplus energy.

According to an embodiment of the present disclosure, a photovoltaic system can be easily interconnected with other distributed energy resources and operated to meet the energy demands of all loads.

According to an embodiment of the present disclosure, power can be supplied to a load that must essentially receive power even when a power grid connected to a photovoltaic system is in a blackout state or when a photovoltaic module generates insufficient power.

According to an embodiment of the present disclosure, by preventing overcharging of a power storage device in an energy storage system, the stability of a photovoltaic system can be ensured.

According to an embodiment of the present disclosure, using an energy storage system compatible with a backup device and implementing various communication networks between the backup device and the energy storage system can enhance the compatibility of the photovoltaic system, thereby improving the system's efficiency and economic feasibility.

### Description of Drawings

FIG. 1A is a configuration diagram of a conventional photovoltaic system.
FIG. 1B is a schematic diagram illustrating a photovoltaic system according to an embodiment of the present disclosure.
FIG. 2 is a diagram illustrating a detailed circuit diagram of a photovoltaic system according to a first embodiment of the present disclosure.
FIG. 3 is a diagram illustrating a detailed circuit diagram of a photovoltaic system according to a second embodiment of the present disclosure.
FIG. 4 is a diagram illustrating a detailed circuit diagram of a photovoltaic system according to a third embodiment of the present disclosure.
FIG. 5 is a diagram illustrating an operation flowchart of a backup device according to an embodiment of the present disclosure.
FIG. 6 is a diagram illustrating an operation flowchart of the backup device according to an embodiment of the present disclosure.
FIG. 7 is a diagram illustrating an operation flowchart of the backup device according to an embodiment of the present disclosure.
FIG. 8 is a diagram illustrating an operation flowchart of the backup device according to an embodiment of the present disclosure.
FIG. 9 is a detailed configuration diagram of a first photovoltaic system according to an embodiment of the present disclosure.
FIG. 10 is a detailed configuration diagram of a second photovoltaic system according to an embodiment of the present disclosure.
FIG. 11 is a detailed configuration diagram related to a backup device for the first photovoltaic system of FIG. 9, according to an embodiment of the present disclosure.
FIG. 12 is a detailed configuration diagram related to a backup device for the second photovoltaic system of FIG. 10, according to an embodiment of the present disclosure.
FIG. 13 is a configuration diagram related to a first communication system configuration that may be applied to the second photovoltaic system according to an embodiment of the present disclosure.
FIG. 14 is a configuration diagram related to a communication system configuration that may be applied to a direct current (DC) photovoltaic system according to an embodiment of the present disclosure.
FIG. 15 is a configuration diagram related to a third communication system configuration that may be applied to the second photovoltaic system according to an embodiment of the present disclosure.
FIG. 16 is a configuration diagram related to a fourth communication system configuration that may be applied to the second photovoltaic system according to an embodiment of the present disclosure.
FIG. 17 is a configuration diagram related to a fifth communication system configuration that may be applied to the second photovoltaic system according to an embodiment of the present disclosure.
FIG. 18 is a configuration diagram related to a sixth communication system configuration that may be applied to the second photovoltaic system according to an embodiment of the present disclosure.

### Best Mode

The above objects and means of the present disclosure and the effects thereof will become clearer through the following detailed description in relation to the accompanying drawings, and accordingly, those of ordinary skill in the art to which the present disclosure pertains can easily practice the technical idea of the present disclosure. In addition, in the description of the present disclosure, when it is determined that a detailed description of the known technology related to the present disclosure may unnecessarily obscure the gist of the present disclosure, the detailed description thereof will be omitted.

In the present specification, the terms such as "or" and "at least one" may represent one of the words listed together or a combination of two or more. For example, "A or B" and "at least one of A and B" may include only one of A or B, or may also include both A and B.

In the present specification, terms such as "first" and "second" may be used to describe various components, but, the corresponding components should not be limited by the terms above. In addition, the above terms should not be construed as limiting the order of each component, and may be used for the purpose of distinguishing one component from another. For example, a "first component" may be named as a "second component" and similarly, a "second component" may also be named as a "first component."

Hereinafter, exemplary embodiments according to the present disclosure will be described in detail with reference to the accompanying drawings. The detailed description to be disclosed hereinafter with the accompanying drawings is intended to describe exemplary embodiments of the present disclosure and is not intended to represent the only embodiments in which the present disclosure may be implemented. In the drawings, parts unrelated to the description may be omitted for clarity of description of the present disclosure, and like reference numerals may designate like components throughout the specification.

Hereinafter, exemplary embodiments according to the present disclosure will be described in detail with reference to the accompanying drawings.

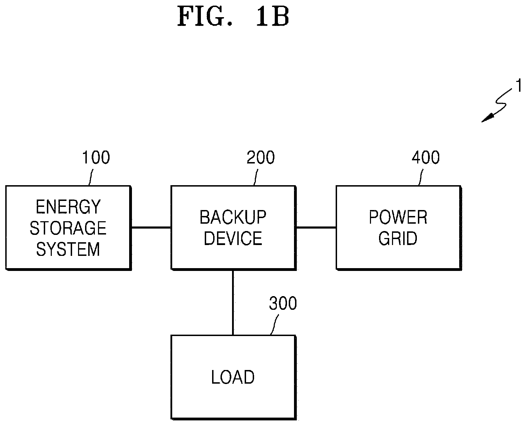

FIG. 1B is a schematic diagram illustrating a photovoltaic system according to an embodiment of the present disclosure.

Referring to FIG. 1B, a photovoltaic system 1 may include an energy storage system (ESS) 100, a backup device 200, a load 300, and a power grid 400.

According to an embodiment of the present disclosure, the energy storage system 100 is a system that produces and stores power and supplies the power to the load 300 or the power grid 400 as needed, and although not shown in the drawing, the energy storage system 100 may include photovoltaic modules, a power conversion system (PCS), an inverter, and the like.

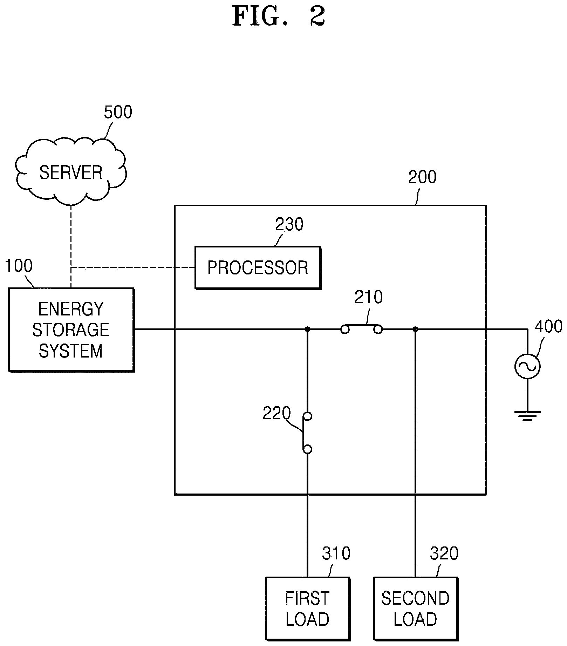

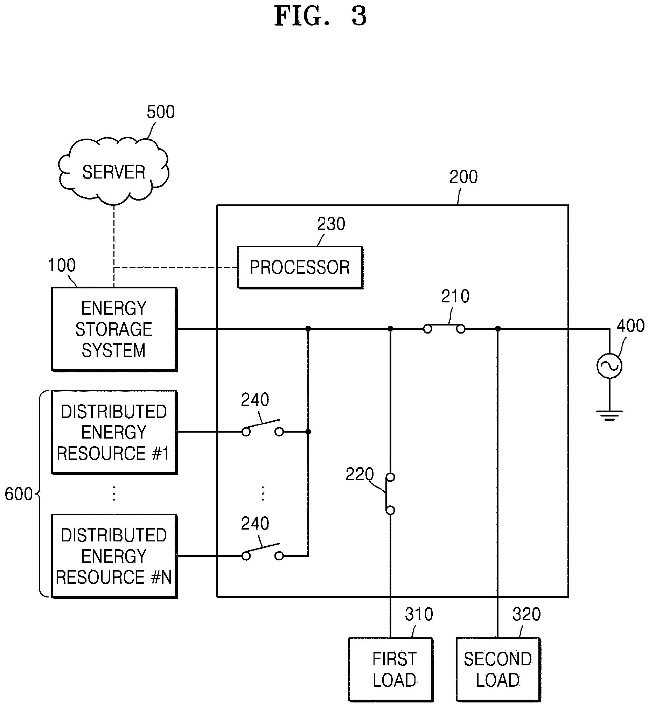

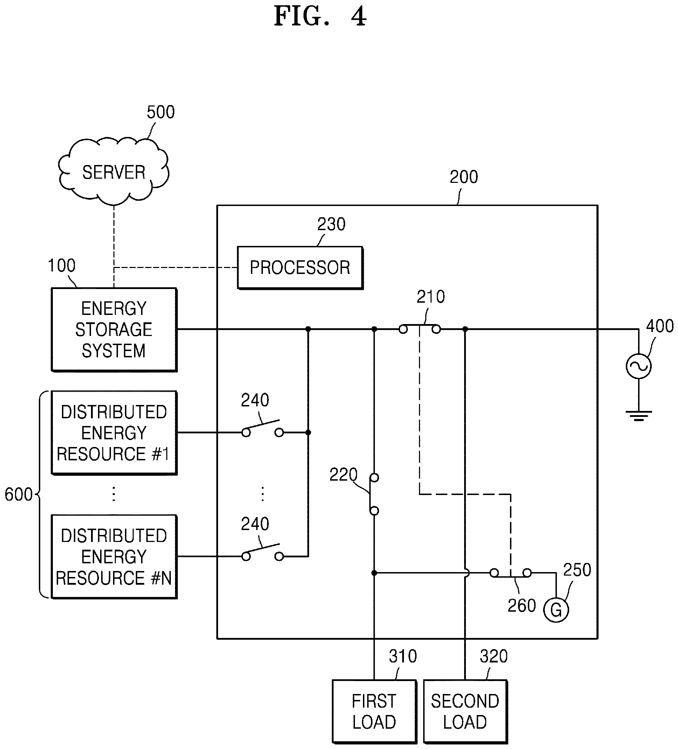

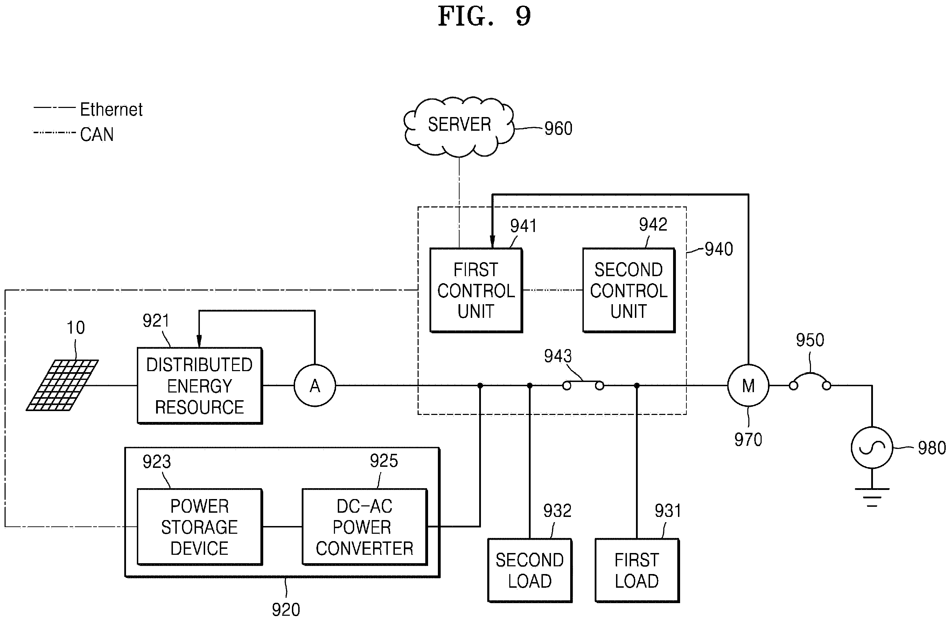

The energy storage system 100 is capable of communicating with and controlling the backup device 200. Meanwhile, although not shown in the drawing, the photovoltaic system 1 of the present disclosure may further include, in addition to the energy storage system 100, at least one external distributed energy resource that can be optionally connected in order to maximize customer convenience and expandability. The case in which only the energy storage system 100 is included will be illustrated and described in detail in FIG. 2, and the case in which both the energy storage system 100 and the distributed energy resource are included will be illustrated and described in detail in FIGS. 3 and 4. In addition, structures of photovoltaic systems and backup devices according to various embodiments will be described with reference to FIGS. 9 to 18.

According to an embodiment of the present disclosure, the backup device 200 is a device that controls the supply and backup of power to the load 300 based on whether the power grid 400 is interconnectable, and the available output power and charging state of the energy storage system 100, and connects the energy storage system 100, the load 300, and the power grid 400 to each other. In the present disclosure, the term "backup" refers to reliably supplying power to the load 300 through various methods described in the present specification, in cases other than when the photovoltaic system 1 is operating normally to supply power to the load 300, particularly when the power grid 400 is not interconnected (also referred to as an independent operation mode). However, "supply" and "backup" will be used interchangeably as needed.

The present disclosure proposes the backup device 200 capable of reliably supplying power to the load 300 even when the power grid 400 is not interconnected, the photovoltaic system 1 including the same, and a method for backing up the photovoltaic system 1.

Hereinafter, configurations and operations of the photovoltaic system 1 according to an embodiment of the present disclosure will be described in detail with reference to the drawings.

FIG. 2 is a diagram illustrating a detailed circuit diagram of a photovoltaic system according to a first embodiment of the present disclosure.

In FIG. 2, as described with reference to FIG. 1, a case in which the photovoltaic system 1 includes only the energy storage system 100 is described.

According to an embodiment of the present disclosure, the backup device 200 includes a main relay 210, a load relay 220, and a processor 230.

The main relay 210 is a component that is disposed between the power grid 400 and the load 300 (a first load 310 in FIG. 2) and performs an on- or off-operation, and may be controlled to perform an on- or off-operation depending on the interconnectable state with the power grid 400.

The load relay 220 is a component that is disposed between the energy storage system 100 and the load 300 (the first load 310 in FIG. 2) and performs an on- or off-operation, and may be controlled to perform an on- or off-operation depending on the available output power and charging state of the energy storage system 100.

At this time, as illustrated in the drawing, the load 300 of the photovoltaic system 1 may be divided into the first load 310 connected between the main relay 210 and the energy storage system 100, and a second load 320 connected between the main relay 210 and the power grid 400.

This is to ensure that the backup device 200 performs the backup for all the load 300 when backing up the power supply to the load 300, but specifically backs up the load that must essentially receive power when the power grid 400 is disconnected. Through this, the components of the photovoltaic system 1 can be protected from overload or the like.

However, the method of dividing the load 300 is not limited to what is shown in FIG. 2, and all the loads may be installed in front of the main relay 210, and additional switches or other components may be disposed to ensure backup for the load that must essentially receive power.

In addition, the first load 310 may be composed of a plurality of different loads, but for convenience of description, the first load 310 will be assumed and described as a single load.

According to an embodiment of the present disclosure, the processor 230 may include, for example, a microcontroller unit (MCU) for power control. The processor 230 may execute software such as programs to control at least one other component (e.g., hardware or software components) of the photovoltaic system 1 (excluding distributed energy resources) and perform various data processing or computations.

The processor 230 may monitor various data received from the photovoltaic modules, the load 300, the power grid 400, and the like, such as identifying whether the power grid 400 is interconnected and the available output power and charging state of the energy storage system 100.

At this time, as shown in FIG. 2, the processor 230 is installed inside the backup device 200, and may communicate with the energy storage system 100 through a server 500 and control the energy storage system 100. However, the present disclosure is not limited thereto, and the processor 230 may communicate directly with an internal processor of the energy storage system 100 (such as an MCU of an inverter). In addition, the processor 230 may be implemented separately outside the backup device 200, or may be implemented on both inside and outside the backup device 200 and perform operations through mutual communication. When implemented both inside and outside the backup device 200, a plurality of processors 230 may use a communication method such as controller area network (CAN) communication, local area network (LAN) communication, or the like, and the communication method is not limited to any one type. Hereinafter, for convenience of description, the processor 230 is considered to be implemented inside the backup device 200.

According to an embodiment of the present disclosure, the processor 230 identifies whether the power grid 400 is interconnectable and controls the main relay 210 to turn off when the power grid 400 is not interconnectable.

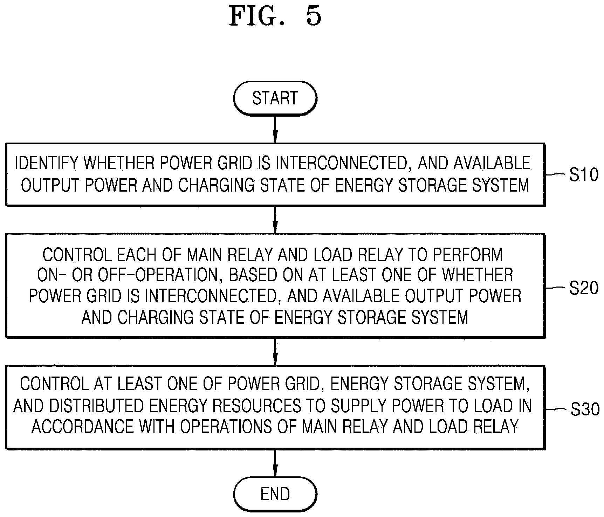

In this case, the processor 230 may control the energy storage system 100 to supply power to the first load 310. In relation to this, a more detailed backup operation will be described with reference to FIGS. 5 to 8.

According to an embodiment of the present disclosure, even when the connection to the power grid 400 is lost, the energy storage system 100 may back up the power supply to the load.

FIG. 3 is a diagram illustrating a detailed circuit diagram of a photovoltaic system according to a second embodiment of the present disclosure.

The photovoltaic system in FIG. 3 is different from that in FIG. 2 only in that at least one or more distributed energy resources 600 (distributed energy resource #1,..., and distributed energy resource #N) are included, and thus overlapping parts with FIG. 2 will be referenced from the description of FIG. 2.

As described above, the energy storage system 100 is a communicable and controllable energy storage system, which may be a proprietary energy storage system or may include distributed energy resources having a communication standard compatible with the proprietary energy storage system. The energy storage system 100 has the advantage of compatibility with both an alternating current (AC)-coupled energy storage system, which is particularly matchable and controllable with a micro-inverter system in the case of a photovoltaic inverter, and a hybrid photovoltaic (PV) direct current (DC)-coupled system, which is composed of a PV inverter that may be matched and controlled with a DC-optimizer system and a battery pack DCDC.

The distributed energy resources 600 according to an embodiment of the present disclosure do not communicate with the processor 230, but may include various resources that a customer wishes to use. The distributed energy resources 600 may include, for example, PV inverters, micro-inverters, DC optimizers, wind turbines, diesel generators, and the like. When linking with the distributed energy resources 600 according to an embodiment of the present disclosure, the distributed energy resources 600 may be optionally connected in a plug-in manner without complex communication or control matching to respond to the loads and charge the energy storage system 100. To this end, the backup device 200 may further include first switches 240 respectively corresponding to the distributed energy resources 600.

According to an embodiment of the present disclosure, the distributed energy resources 600 may supply power to a battery of the energy storage system 100. The processor 230 according to an embodiment of the present disclosure may monitor the available output power and charging state of the energy storage system 100, and control each of the first switches 240 to perform an on- or off-operation as needed in order to adjust power supply. In relation to this, a more detailed backup operation will be described with reference to FIGS. 5 to 8.

According to an embodiment of the present disclosure, the energy storage system 100 may reliably back up power supply to the load 300 with power support from the distributed energy resources 600.

According to an embodiment of the present disclosure, in a grid-connected mode, the backup device 200 allows the energy storage system 100 to operate as an auxiliary power source for the power grid 400, enabling coordinated operation with the energy storage system 100 and the distributed energy resources 600. In an independent operation mode, the energy storage system 100 must handle the demand of the entire loads without being connected to the power grid 400 and is therefore defined as a voltage source to perform voltage control-based operation and also operate in coordination with the energy storage system 100 or the distributed energy resources 600.

According to an embodiment of the present disclosure, by parallel control of the energy storage system 100 and the distributed energy resources 600, the photovoltaic system may be expanded and may more reliably back up power supply to the load without using complex control or communication. Accordingly, the photovoltaic system 1 may be configured flexibly, and may utilize surplus energy efficiently and economically.

According to an embodiment of the present disclosure, the photovoltaic system may be easily interconnected with other distributed energy resources, and thus may be operated while meeting energy demands of the entire loads.

FIG. 4 is a diagram illustrating a detailed circuit diagram of a photovoltaic system according to a third embodiment of the present disclosure.

The photovoltaic system in FIG. 4 is different from that in FIG. 3 only in that a generator 250 and a second switch 260 connecting the generator 250 are further included, and thus overlapping parts with FIGS. 2 and 3 will be referenced from the descriptions of FIGS. 3 and 4.

According to an embodiment of the present disclosure, the backup device 200 may further include the generator 250 and the second switch 260 that connects the load (the first load 310) to the generator 250. At this time, the second switch 260 may be implemented to operate complementarily with the main relay 210. When the main relay 210 performs an on-operation, the second switch 260 performs an off-operation, and when the main relay 210 performs an off-operation, the second switch 260 performs an on-operation.

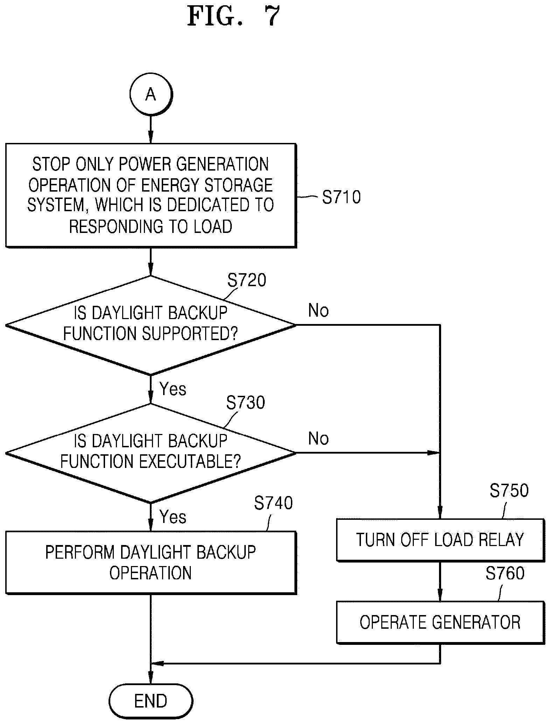

According to an embodiment of the present disclosure, the generator 250 operates as a power source apart from the energy storage system 100 and the distributed energy resources 600. The generator 250 may supply power to the first load 310 when power supply from the energy storage system 100 is difficult and/or when the load relay 220 performs an off-operation. In relation to this, a more detailed backup operation will be described with reference to FIG. 7.

FIG. 5 is a diagram illustrating an operation flowchart of the backup device according to an embodiment of the present disclosure.

According to an embodiment of the present disclosure, the processor 230 may identify whether the power grid 400 is interconnected, and the available output power and charging state of the energy storage system 100 (S10).

As described above, the processor 230 may monitor various data received from the internal components of the energy storage system 100, such as the photovoltaic module, the battery, the PCS, and the inverter, the load 300, the power grid 400, and the like. To this end, although not shown in the drawing, the photovoltaic system 1 may further include a measuring device, such as a load sensor, an inverter output meter, or a sensor, to measure the amount of power, current, voltage, and the like. The available output power of the energy storage system 100 may include power that is usable by the energy storage system 100.

According to an embodiment of the present disclosure, the processor 230 may control each of the main relay 210 and the load relay 220 to perform an on- or off-operation, based on whether the power grid 400 is interconnected, and the available output power and charging state of the energy storage system 100 (S20).

Specifically, when the power grid 400 operates normally (in the grid-connected mode), the processor 230 controls the main relay 210 to turn on, (maintains the on control, since, by default, the main relay 210 is turned on). On the other hand, the processor 230 controls the main relay 210 to turn off, when an error occurs in the power grid 400, the power grid 400 operates abnormally, a rapid shutdown (RSD) signal is received, or a request to switch to the independent operation mode is received from the outside (via the server).

Similarly, when the available output power or charging state of the energy storage system 100 is normal, the processor 230 may control the load relay 220 to turn on (maintain the on control, since by default, the load relay 220 is turned on). For example, when a charge amount of the energy storage system 100 is greater than an amount of charge energy insufficient for continuous supply to the load, it is considered that the energy storage system 100 can sufficiently supply power to the load 300, and thus it is regarded as a normal condition of the available output power and charging state of the energy storage system 100. On the other hand, when the charging state of the energy storage system 100 is in an over-discharging state or when an error occurs in the energy storage system 100, the processor 230 controls the load relay 220 to turn off.

According to an embodiment of the present disclosure, the processor 230 may control at least one of the power grid 400, the energy storage system 100, and the distributed energy resources 600 to supply power to the load 300 in accordance with the operations of the main relay 210 and the load relay 220 (S30).

Specifically, when the power grid 400 is connected (that is, when the power grid 400 is in a grid interconnection condition), the processor 230 may operate in the grid-connected mode and control the energy storage system 100 or the power grid 400 to supply power to the load 300. According to an embodiment of the present disclosure, the processor 230 may identify whether the power grid 400 is in the grid interconnection condition based on whether an operating voltage of the power grid, which is measured through a measuring device, is within a predefined range.

At this time, when the power grid 400 is in the grid interconnection condition, the energy storage system 100 may operate as a current source, and the distributed energy resources 600 may charge power to the battery of the energy storage system 100 or perform maximum power point tracking (MPPT) control.

When disconnected from the power grid 400 (that is, when the power grid 400 is not in the interconnection condition), the processor 230 may operate in the independent operation mode and control the energy storage system 100 to supply power to the load 300. At this time, when, as described above, the generator 250 is additionally provided, the processor 230 may control the generator 250 to supply power to the load 300.

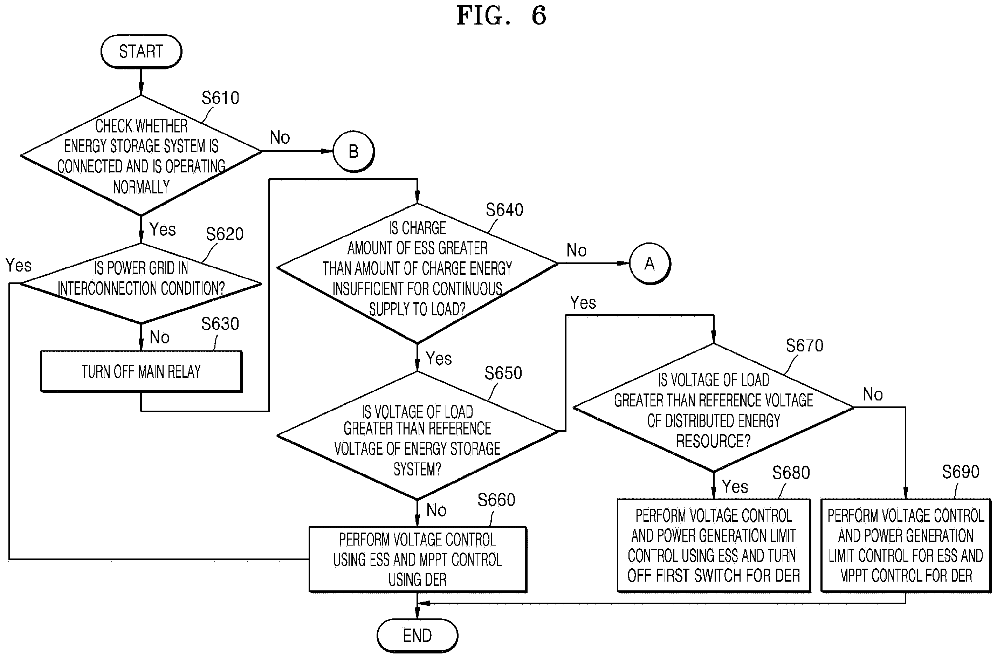

FIG. 6 is a diagram illustrating an operation flowchart of the backup device according to an embodiment of the present disclosure.

FIG. 6 specifically describes the backup operation in the independent operation mode. At this time, the overlapping parts with FIG. 5 will be referenced from the descriptions of FIG. 5.

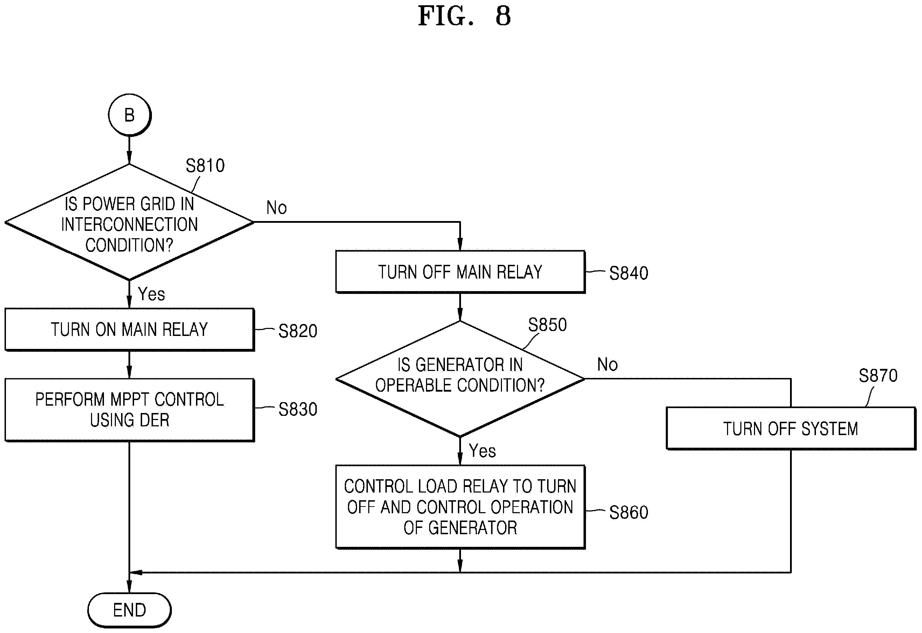

First, the processor 230 checks whether the energy storage system 100 is connected to the backup device 200 and is operating normally (S610). When the energy storage system 100 is not connected to the backup device 200, or is connected to the backup device 200 but does not operate normally (No in S610), this will be described with reference to FIG. 8.

When the energy storage system 100 is connected to the backup device 200 and operating normally (Yes in S610), the processor 230 identifies whether the power grid 400 is in the interconnection condition (S620).

The processor 230 controls the main relay 210 to turn off when the power grid 400 is not in the interconnection condition (No in S620) (S630).

The processor 230 compares the charge amount of the energy storage system 100 with the amount of charge energy insufficient for continuous supply to the load 300 (S640).

The case in which the charge amount of the energy storage system 100 is less than the amount of charge energy insufficient for continuous supply to the load 300 (No in S640) will be described with reference to FIG. 7.

When the charge amount of the energy storage system 100 is greater than the amount of charge energy insufficient for continuous supply to the load 300 (Yes in S640), the processor 230 may primarily control the energy storage system 100 to supply power to the load 300. However, in the present embodiment, additional consideration is given to the interconnection with the distributed energy resources 600, under conditions of independent operation.

When the charge amount of the energy storage system 100 is greater than the amount of charge energy insufficient for continuous supply to the load 300 (Yes in S640), the processor 230 may determine whether to limit a power output of the energy storage system 100 based on a voltage of the load 300 and a reference voltage of the energy storage system 100 (S650). The reference voltage of the energy storage system 100 is a reference voltage for determining a limitation on the power output. The term "limitation on the power output" means that the energy storage system 100 stops or reduces power generation and reception.

The processor 230 may perform voltage control to supply power to the load 300 without limiting the power output of the energy storage system 100 when the voltage of the load 300 is greater than the reference voltage of the energy storage system 100 (Yes in S650).

When the voltage of the load 300 is less than the reference voltage of the energy storage system 100 (No of S650), the processor 230 may perform voltage control so that the energy storage system 100 supplies power to the load 300 but limits the power output.

The energy storage system 100 may independently perform power generation using renewable energy sources such as photovoltaic modules, and in addition, the energy storage system 100 may charge the battery by receiving power from the distributed energy resources 600. However, when the battery is sufficiently charged, and the energy storage system 100 continues to produce power or receives power from the distributed energy resources 600, it is necessary to limit the charging and power generation of the energy storage system 100 and to stop receiving power from the distributed energy resources 600.

When the voltage of the load is less than the reference voltage of the energy storage system 100 (No in S650), the processor 230 may perform voltage control so that the energy storage system 100 supplies power to the load 300, and the distributed energy resources 600 may perform an MPPT control (S660).

When the voltage of the load is greater than the reference voltage of the energy storage system 100 (Yes in S650), the processor 230 may control each of the first switches 240 to perform an on- or off-operation based on the voltage of the load 300 and a reference voltage of the distributed energy resource 600.

Specifically, when the voltage of the load 300 is greater than the reference voltage of the distributed energy resource 600 (Yes in S670), the processor 230 may turn off the first switches 240 associated with the distributed energy resources 600 to separate the distributed energy resources 600 (S680). This is the case in which the voltage of the load is greater than the reference voltage of the energy storage system 100, and thus, the processor 230 may perform voltage control so that the energy storage system 100 supplies power to the load 300 but limits the power output.

When the voltage of the load is less than the reference voltage of the distributed energy resource 600 (No in S670), the processor 230 may turn on the first switches 240 associated with the distributed energy resources 600, and the distributed energy resources 600 may perform an MPPT control (S690). Likewise, this is the case in which the voltage of the load is greater than the reference voltage of the energy storage system 100, and thus the processor 230 performs voltage control so that the energy storage system 100 supplies power to the load 300 but limits the power output.

Meanwhile, when the power grid is in the interconnection condition, the processor 230 may control the energy storage system 100 and the distributed energy resources 600 to operate normally as described in relation to S30 of FIG. 5 (S660).

According to an embodiment of the present disclosure, further consideration is given to whether to limit the power generation of the energy storage system 100, and whether to interconnect the distributed energy resources 600 while backing up the load using the energy storage system 100, ensuring that the load can be backed up more reliably.

FIG. 7 is a diagram illustrating an operation flowchart of the backup device according to an embodiment of the present disclosure.

FIG. 7 illustrates the backup operation in relation to S640 of FIG. 6, when the charge amount of the energy storage system 100 is less than or equal to the amount of charge energy insufficient for continuous supply to the load 300.

According to an embodiment of the present disclosure, when the charge amount of the energy storage system 100 is less than or equal to the amount of charge energy insufficient for continuous supply to the load 300 (No in S640), the processor 230 may stop only the power generation operation of the energy storage system, which is dedicated to responding to the load (S710). When the charge amount is less than the amount of charge energy insufficient for continuous supply to the load 300, an abnormal off-grid operation of the photovoltaic system 1 may be preemptively prevented by stopping only the power generation operation of the energy storage system, which is dedicated to responding to the load.

According to an embodiment of the present disclosure, the processor 230 may identify whether a daylight backup function is supported (S720).

The term "daylight backup function" refers to responding to the load 300 using the power generated by the photovoltaic module of the energy storage system 100 without using the power of the battery of the energy storage system 100.

When the daylight backup function is not supported (No in S720), the processor 230 may control the load relay 220 to turn off and the second switch 260 to turn on so that the generator 250 can supply power to the load 300 (S750 and S760).

However, even when the daylight backup function is supported, the daylight backup function may not be performed depending on the operating condition of the energy storage system 100.

Accordingly, when the processor 230 supports the daylight backup function (Yes in S720), the processor 230 may identify whether the daylight backup function can be performed (S730).

When the processor 230 attempts to activate the daylight backup function, and the daylight backup function is executed (Yes in S730), the processor 230 may perform the daylight backup operation (S740). At this time, when a plurality of first loads 310 are provided, some of the plurality of first loads 310 may be supplied with power through the daylight backup function. Specifically, the processor 230 may verify the amount of power, which can be supplied to the loads during the daylight backup operation, and power demands of the loads, and then, may perform power supply control selectively to some of the loads. To this end, switches that respectively connect the first loads 310 are separately provided, and the processor 230 may perform backup by controlling the switches to perform an on- or off-operation.

When the processor 230 attempts to activate the daylight backup function and the daylight backup function is not executed, the processor 230 may attempt to activate the daylight backup function again. However, when the processor 230 attempts to activate the daylight backup function a predefined number of times and the daylight backup function does not execute, it is identified that the daylight backup function cannot be performed (No of S730).

When the daylight backup function cannot be performed (No of S730), the processor 230 may control the load relay 220 to turn off and the second switch 260 to turn on, allowing the generator 250 to supply power to the load 300 (S750 and S760).

FIG. 8 is a diagram illustrating an operation flowchart of the backup device according to an embodiment of the present disclosure.

FIG. 8 illustrates the backup operation when, in operation S610 of FIG. 6, the energy storage system 100 is not connected to the backup device 200, or does not operate normally even when connected (No in S610).

According to an embodiment of the present disclosure, the processor 230 identifies whether the power grid 400 is in the interconnection condition (S810), and when the power grid 400 is in the interconnection condition (Yes in S810), the processor 230 controls the main relay 210 to turn on (S820). At this time, the distributed energy resource may perform an MPPT control (S830).

The processor 230 according to an embodiment of the present disclosure may control the main relay 210 to turn off when the power grid 400 is not in the interconnection condition(No in S810) (S840). For the backup operation, the processor 230 may identify whether the generator is in an operable condition (S850).

When the generator is in the operable condition (Yes in S850), the processor 230 may control the load relay 220 to turn off and control the second switch 260 to turn on, thereby allowing the generator 250 to supply power to the load 300 (S860). At this time, the processor 230 controls the first switches 240 to turn off, and the distributed energy resources 600 may power off and subsequently restart.

When the generator does not meet the operating conditions (No in S850), the processor 230 may turn off the system power (S870).

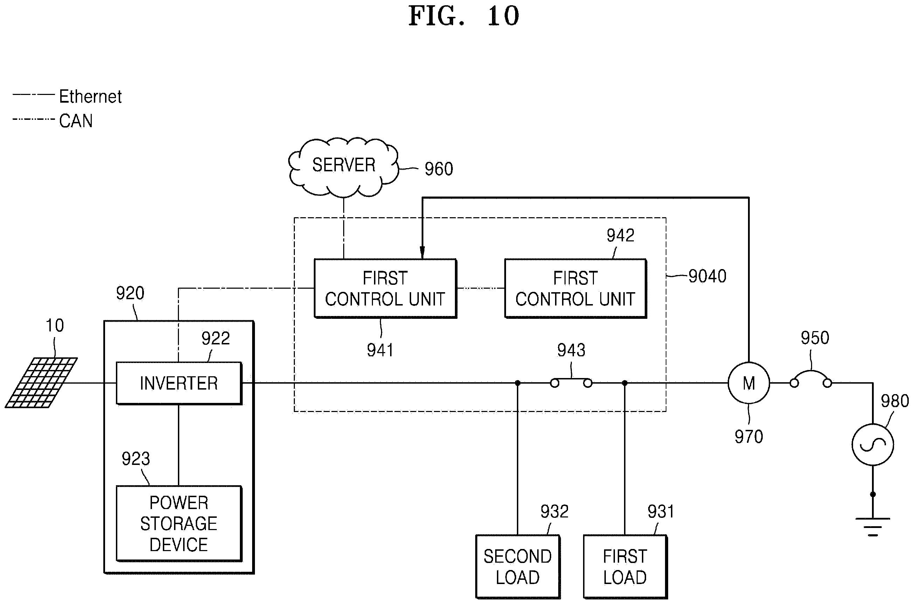

FIG. 9 is a detailed configuration diagram of a first photovoltaic system according to an embodiment of the present disclosure, and FIG. 10 is a detailed configuration diagram of a second photovoltaic system according to an embodiment of the present disclosure.

Referring to FIGS. 9 and 10, the photovoltaic system according to an embodiment of the present disclosure may include a photovoltaic module 10, a distributed energy resource 921, loads 931 and 932, an energy storage system 920 that includes an inverter 922 and a power storage device 923, a backup device 940, a first control unit 941, a second control unit 942, a main relay 943, a sensor unit 950, a server 960, a meter 970, and a power grid 980.

The photovoltaic module 10 may output a certain voltage of power by converting light energy of the sun, which is incident on the surface, into electrical energy by the photoelectric effect.

The distributed energy resource 921 and the energy storage system 920 may convert DC power generated from the photovoltaic module 10 into AC power, and then supply this AC power to the loads 931 and 932 and the power grid 980.

In FIG. 9, the distributed energy resource 921 of the photovoltaic system is not compatible with the backup device 940, and thus the distributed energy resource 921 may not be connected to the backup device 940 through a communication network. Accordingly, a control signal may not be transmitted from the backup device 940 to the distributed energy resource 921.

On the other hand, in FIG. 10, the energy storage system 920 of the photovoltaic system, which includes the inverter 922 and the power storage device 923, is compatible with the backup device 940, and thus, the energy storage system 920 may be connected to the backup device 940 through a communication network. Accordingly, the backup device 940 may transmit a control signal to the energy storage system 920.

The loads 931 and 932 may receive power from at least one of the energy storage system 920 and the power grid 980. The loads 931 and 932 may include a first load 931, which is disposed between the main relay 943 and the power grid 980, and the second load 932, which is disposed between the main relay 943 and the energy storage system 920, with the main relay 943 interposed between the first and second loads. At this time, the loads 931 and 932 may include the first load 931 for which power supply is not essential and the second load 932 for which power supply is essential.

According to an embodiment of the present disclosure, when the photovoltaic system is connected to the power grid 980, or when the power supplied from the photovoltaic module 10 to the loads 931 and 932 is greater than the power required by the loads, the backup device 940 may supply power not only to the second load 932, for which power supply is essential, but also to the first load 931, for which power supply is not essential.

According to an embodiment of the present disclosure, when the photovoltaic system is in a blackout state that is a state disconnected from the power grid 980, and the power supplied from the photovoltaic module 10 to the loads 931 and 932 is less than the power required by the loads 931 and 932, the backup device 940 supplies power only to the second load 932, for which power supply is essential, and does not supply power to the first load 931, for which power supply is not essential.

According to an embodiment of the present disclosure, the first load 931 may be a charging device for a coffee pot, an iron, a microwave, and other various electronic products used temporarily in a household.

According to an embodiment of the present disclosure, the second load 932 may be a refrigerator or a boiler that must operate continuously in the household.

Referring to FIG. 10, the energy storage system 920 stores at least a portion of the AC power output from the inverter 922 in the power storage device 923. For example, among the AC power output from the inverter 922, the remaining power after supplying the load may be stored in the power storage device 923. In addition, when there is a need for power supply to a load that must essentially receive power, the energy storage system 920 outputs the power stored in the power storage device 923 to the load. In addition, when the connection state between the photovoltaic system and the power grid 980 is in an off state and the power generated from the photovoltaic module 10 is insufficient, the energy storage system 920 may supply power to the loads 931 and 932. At this time, the energy storage system 920 may supply the power only to the second load 932 and not to the first load 931.

Unlike in FIG. 10, the energy storage system 920 shown in FIG. 9 may further include a DC-AC power converter 925. The DC-AC power converter 925 may convert AC power into DC power so that the remaining power, after being supplied from the distributed energy resource 921 to the load 931, can be stored in the power storage device 923. In addition, the DC-AC power converter 925 may convert the DC power stored in the power storage device 923 into AC power so that the AC power is supplied to the loads 931 and 932.

According to an embodiment of the present disclosure, the DC-AC power converter 925 may be used in the photovoltaic system that includes the distributed energy resource 921, as shown in FIG. 9. The distributed energy resource 921 may include an inverter that converts the DC power generated by the photovoltaic module 10 into AC power. The AC power generated by the distributed energy resource 921 is supplied to the loads 931 and 932. The backup device 940 is connected to the energy storage system 920, ensuring that the remaining AC power, after being supplied to the loads 931 and 932, is stored in the power storage device 923. At this time, the DC-AC power converter 925 converts the remaining AC power, after being supplied the loads 931 and 932, into DC power and supplies the DC power to the power storage device 923. In addition, when the photovoltaic module 10 cannot generate power, the backup device 940 supplies the power stored in the power storage device 923 to the loads 931 and 932. At this time, the DC-AC power converter 925 converts the DC power stored in the power storage device 923 into AC power.

The sensor unit 950 detects a connection state between the photovoltaic system and the power grid 980.

According to an embodiment of the present disclosure, the state in which the photovoltaic system and the power grid are connected to each other is referred to as an on state.

According to an embodiment of the present disclosure, the state in which the photovoltaic system and the power grid are disconnected from each other is referred to as an off state.

As shown in FIG. 9, the first control unit 941 and the second control unit 942 are installed inside the backup device 940, and may communicate with the energy storage system 920 through the server 960 and control the energy storage system 920. However, the present disclosure is not limited thereto, and as will be described below, the first control unit 941 and the second control unit 942 may directly communicate with an internal processor (such as an MCU of the inverter) of the energy storage system 920.

In addition, one of the first control unit 941 and the second control unit 942 may be separately implemented outside the backup device 940, or the first control unit 941 and the second control unit 942 may be individually implemented inside and outside the backup device 940 and may communicate with each other to perform operations. When the first control unit 941 and the second control unit 942 are implemented individually, the plurality of control units may use a communication method such as CAN communication, LAN communication, or the like, and the communication method is not limited to any one type.

The server 960 may analyze the data received from the first control unit 941 to display a state of the photovoltaic system to a user, and may receive an operation instruction for the photovoltaic system from the user and transmit the operation instruction to the first control unit 941.

The first control unit 941 may receive data from at least one of the energy storage system 920 and the sensor unit 950, and may transmit the data to the server 960. In addition, the first control unit 941 may transmit the operation instruction to the second control unit 942.

The second control unit 942 may control at least one of the energy storage system 920 and the backup device 940 based on the operation instruction.

According to an embodiment of the present disclosure, the server 960 may configure a communication network with the first control unit 941 to receive data from the first control unit 941. For example, the communication network that connects the server 960 to the first control unit 941 may utilize Ethernet.

In addition, the server 960 may analyze the data received from the first control unit 941 and display analysis results to the user. In addition, the server 960 may receive an operation instruction from the user based on the state of the photovoltaic system and may transmit the operation instruction to the first control unit 941.

According to an embodiment of the present disclosure, the data may be monitoring data or log data. Specifically, the monitoring data may include information about a current operating state of the photovoltaic system. For example, the monitoring data may include current power generation data of the photovoltaic module 10 or data necessary to check any abnormalities of the photovoltaic module 10. The log data may include operational history data of components, such as the energy storage system 920 and the backup device 940, which constitute the photovoltaic system. For example, operations of the photovoltaic module 10 over a certain period of time may be checked through the log data.

According to an embodiment of the present disclosure, the operation instruction includes various modes for driving the photovoltaic system. For example, the operation instruction may include an automatic operation mode, a manual operation mode, an energy storage system usage mode, and the like.

The first control unit 941 is connected to at least one of the energy storage system 920 and the sensor unit 950 through a communication network. **In** addition, the second control unit 942 is connected to the backup device 940 and the server 960 through a communication network.

According to an embodiment of the present disclosure, the first control unit 941 may be located in at least one of the backup device 940 and the energy storage system 920.

The second control unit 942 is connected to the first control unit 941 through the communication network, and may receive the operation instruction from the first control unit 941. For example, the first control unit 941 may be connected to the second control unit 942 using CAN communication.

According to an embodiment of the present disclosure, the second control unit 942 may control the operation of at least one of the energy storage system 920 and the backup device 940 in response to the operation instruction.

According to an embodiment of the present disclosure, the second control unit 942 may be located in the backup device 940.

The backup device 940 controls the operation of the energy storage system 920 according to the connection state between the photovoltaic system and the power grid 980, and the power generation state of the photovoltaic module. To this end, the backup device 940 may include the second control unit 942.

In addition, the backup device 940 may control the power supplied to the loads 931 and 932 from the energy storage system 920 or the power grid 980. To this end, the backup device 940 may include the main relay 943. The main relay 943 may be controlled to perform an on- or off-operation depending on whether the interconnection with the power grid 980 is established.

According to an embodiment of the present disclosure, in FIG. 9, when the distributed energy resource 921 is not compatible with the backup device 940, the backup device 940 may control the operation of the energy storage system 920. Specifically, when the photovoltaic system fails to receive power from the power grid 980 due to a power outage, and the photovoltaic module 10 is unable to generate power, the backup device 940 may check the status of each energy storage system 920 and control the operation of the energy storage system 920 to ensure that the power required by the second load 932 is output.

According to an embodiment of the present disclosure, in FIG. 10, when the energy storage system 920 is compatible with the backup device 940, the backup device 940 may control the operation of the energy storage system 920. Specifically, when the photovoltaic system fails to receive power from the power grid 980 due to a power outage, and the photovoltaic module 10 is unable to generate power, the backup device 940 may check the status of the energy storage system 920 and control the operation of the energy storage system 920 to ensure that the power required by the second load 932 is output.

According to an embodiment of the present disclosure, when the connection state of the backup device 940 is in the on state and the power supplied from the photovoltaic module to the loads 931 and 932 exceeds the power required by the loads 931 and 932, resulting in surplus power, the surplus power may be supplied to the power grid or to a power storage device. In addition, when the power supplied from the photovoltaic module 10 to the loads is less than the power required by the loads 931 and 932, the backup device 940 may receive additional required power from the power grid 980 and supply the power the loads 931 and 932.

According to an embodiment of the present disclosure, when the connection state of the backup device 940 is in the off state and the power supplied from the photovoltaic module to the loads 931 and 932 exceeds the power required by the loads 931 and 932, resulting in surplus power, the surplus power may be charged into the energy storage system 920. In addition, when the power supplied from the photovoltaic module 10 to the loads 931 and 932 is less than the power required by the loads 931 and 932, the power stored in the energy storage system 920 may be supplied only to the second load 932.

The main relay 943 is located between the first load 931 and the second load 932, and may be used to control the power, which is supplied to the first load 931 and the second load 932, according to the connection state with the power grid 980 and the power generation state of the photovoltaic module 10.

According to an embodiment of the present disclosure, when the main relay 943 is connected, the first load 931 and the second load 932 may receive power from any one of the energy storage system 920 or the power grid 980.

According to an embodiment of the present disclosure, when the main relay 943 is turned off, the first load 931 cannot receive power, and the second load 932 may receive power from the energy storage system 920.

The meter 970 measures the power supplied from the photovoltaic system to the power grid. For example, when the power supplied from the photovoltaic module to the loads is greater than the power required by the loads, resulting in surplus power, the photovoltaic system may supply the surplus power to the grid. Specifically, when the surplus power is supplied to the grid, the user of the photovoltaic system may receive benefits such as a reduction in electricity fees.

According to an embodiment of the present disclosure, the photovoltaic system has the advantage of stably supplying power to loads for which power supply is essential by utilizing the energy storage system 920 and the backup device 940, depending on the power generation situation of the photovoltaic system.

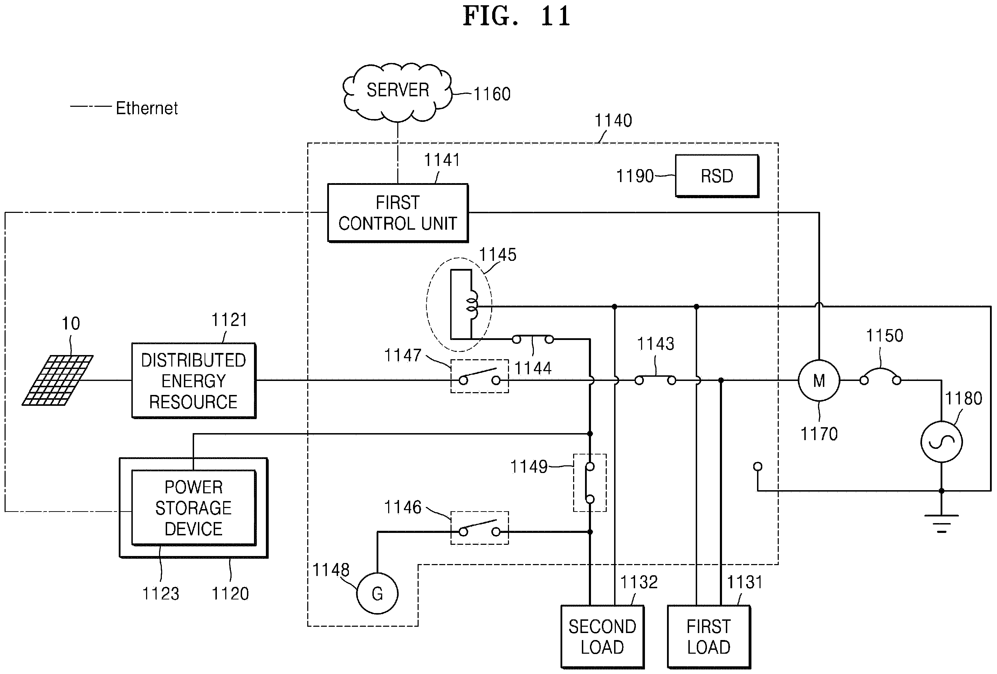

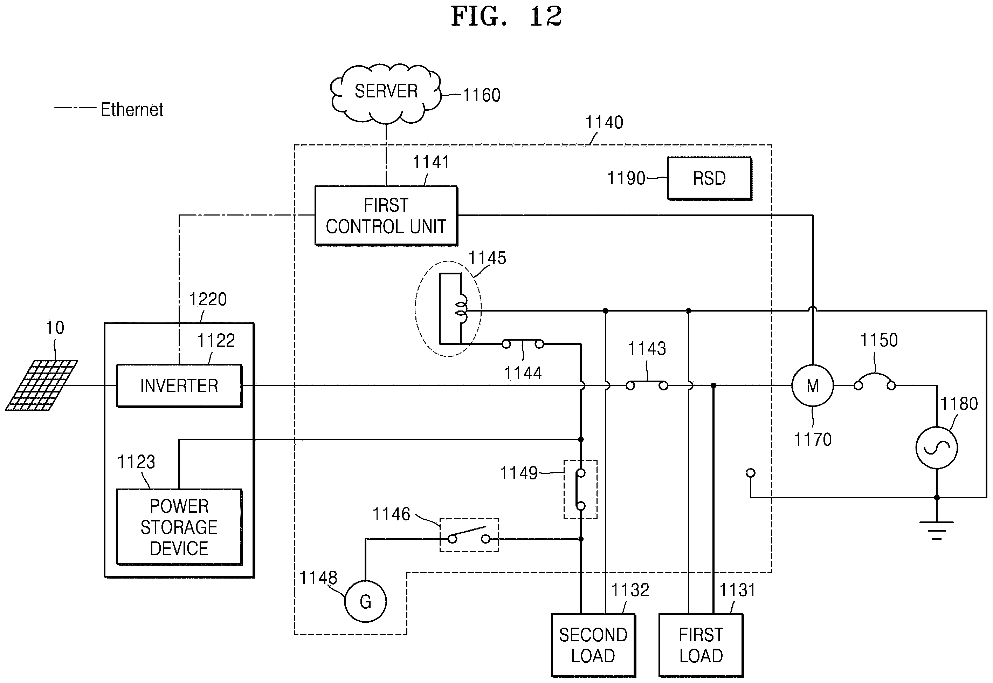

FIG. 11 is a detailed configuration diagram related to a backup device for the first photovoltaic system of FIG. 9, according to an embodiment of the present disclosure, and FIG. 12 is a detailed configuration diagram related to a backup device for the second photovoltaic system of FIG. 10, according to an embodiment of the present disclosure.

Referring to FIGS. 11 and 12, a backup device 1140 according to an embodiment of the present disclosure may be configured to further include an autotransformer 1145, a first switch 1147, a second switch 1146, a load relay 1149, and a rapid shut-down (RSD) device 1190.

The autotransformer 1145 is used to determine a reference point of voltage when the photovoltaic system is disconnected from the power grid. For example, the autotransformer 1145 may generally use a single-winding transformer. The autotransformer 1145 may adjust the magnitude of a voltage applied to the load based on the power grid not being interconnected, and may further include a switch 1144 for controlling a connection state of the autotransformer 1145.

Unlike in FIG. 12, the first photovoltaic system shown in FIG. 11 further includes the first switch 1147. The first switch 1147 controls power output from a distributed energy resource 1121. For example, the first switch 1147 may be turned off when an energy storage system 1120 is fully charged and excessive power is being produced from the photovoltaic module 10. Accordingly, the first switch 1147 may protect loads 1131 and 1132 and the energy storage system 1120 of the photovoltaic system.

According to an embodiment of the present disclosure, when power can no longer be supplied to the loads because the photovoltaic system is disconnected from the power grid 1180, power cannot be generated from the photovoltaic module 10, and the power stored in the energy storage system 1120 is completely exhausted, power may be supplied to the loads using a generator 1148.

The backup device 1140 may further include the second switch 1146 that connects a second load 1132 to the generator 1148 and operates complementarily with a main relay 1143. A first control unit 1141 may control the generator 1148 to supply power to the second load 1132 based on whether power is being supplied from the photovoltaic module 10, the power grid 1180, and the energy storage system 1120. To this end, the first control unit 1141 may operate the second switch 1146 to perform an on- or off-operation. Meanwhile, when forced charging of a power storage device 1123 is necessary, emergency charging may be performed using the generator 1148.

The load relay 1149 is a component that is disposed between the energy storage system 1120 and the second load 1132 and performs an on- or off-operation, and may be controlled to perform an on- or off-operation according to the available output power and charging state of the energy storage system 1120.

As described above, according to an embodiment of the present disclosure, the photovoltaic system may have the advantage of reliably supplying power to a load that must essentially receive power and ensuring the stability of the photovoltaic system.

The RSD device 1190 is a device that controls the transition of input energy sources, such as the distributed energy resource and the energy storage device, to a safe state and protects the system when an emergency shutdown of the photovoltaic system is necessary due to emergency situations such as a fire. The RSD device 1190 may be configured as a physical switch, and may be configured to transmit a control signal for shutdown operation to the distributed energy resource 1121 or the energy storage system 1120 upon receiving a switch input. However, the RSD device 1190 may be implemented in various ways, including a communication unit that receives a control signal requesting a shutdown from an external source in addition to the switch input.

The RSD device 1190 may be directly connected to the backup device 1140, and may also be connected to the energy storage system 1120 as well as to the distributed energy resource 1121.

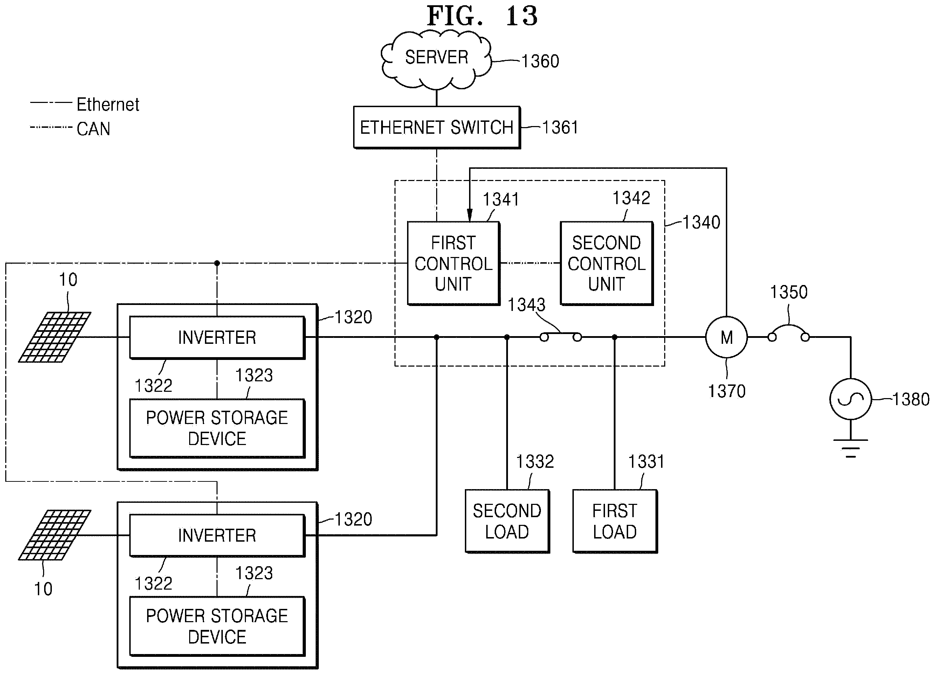

Hereinafter, FIGS 13 to 18 are diagrams for describing various methods of configuring the communication system that may be applied to the photovoltaic system.

FIG. 13 is a configuration diagram related to a first communication system configuration that may be applied to the second photovoltaic system according to an embodiment of the present disclosure.

Referring to FIG. 13, the second photovoltaic system according to an embodiment of the present disclosure may include a plurality of photovoltaic modules 10, a plurality of energy storage systems 1320, each of which includes an inverter 1322 and a power storage device 1323, a backup device 1340, loads 1331 and 1332, and the like.

According to an embodiment of the present disclosure, a first control unit 1341, which is connected to a server 1360, may be located in the backup device 1340.

According to an embodiment of the present disclosure, the server 1360, the first control unit 1341, and the plurality of energy storage systems 1320 may be connected in parallel through an Ethernet switch 1361.

According to an embodiment of the present disclosure, a second control unit 1342, which controls operations of the plurality of energy storage systems 1320, may be located in the backup device 1340.

According to an embodiment of the present disclosure, the first control unit 1341 and the second control unit 1342 may form a communication network to transmit and receive signals to and from each other. For example, the communication network may use CAN communication.

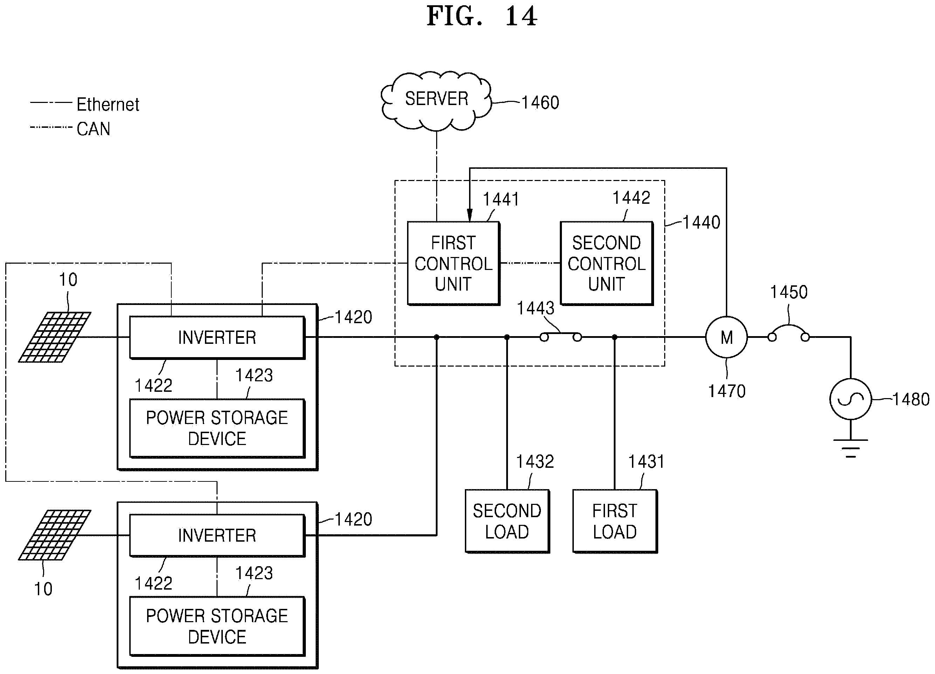

FIG. 14 is a configuration diagram related to a communication system configuration that may be applied to a DC photovoltaic system according to an embodiment of the present disclosure.

Referring to FIG. 14, the DC photovoltaic system according to an embodiment of the present disclosure may include the plurality of photovoltaic modules 10, a plurality of energy storage systems 1420, each of which includes an inverter 1422 and a power storage device 1423, a backup device 1440, loads 1431 and 1432, and the like.

Unlike in FIG. 13, in the second communication system shown in FIG. 14, a first control unit 1441 is directly connected to a communication server 1460 through a communication network. For example, the communication network may use Ethernet.

In addition, unlike in FIG. 13, in the second communication system shown in FIG. 14, the plurality of energy storage systems 1420 may be connected in parallel to the first control unit 1441 of the backup device 1440. For example, the communication network may use Ethernet.

The following includes specific embodiments related to operations of the second photovoltaic system, which is composed of the first communication system and the second communication system.

The first control unit 1441 collects monitoring data and log data from the plurality of energy storage systems 1420, the backup device 1440, and a sensor unit 1450 and transmits the data to a server 1460 through Ethernet.

The server 1460 determines status information of the photovoltaic system based on the monitoring data and the log data and displays the status information to the user. In addition, the server 1460 receives an operation instruction from the user. The server 1460 transmits the operation instruction received from the user to the first control unit through the Ethernet. For example, the server 1460 may determine that power output of the photovoltaic module 10 is insufficient based on the data received from the first control unit 1441, and may output the corresponding information to the user. The server 1460 may receive an operation instruction from the user indicating an "energy storage system usage mode." The "energy storage system usage mode" is a mode that uses power stored in the energy storage systems 1420. The server 1460 may transmit the received operation instruction to the first control unit 1441.

The first control unit 1441 may transmit the operation instruction received from the server 1460 to a second control unit 1442 through CAN communication.

The second control unit 1442 generates a control signal for controlling the plurality of energy storage systems 1420 based on the operation instruction. At this time, the generated control signal may be transmitted to the first control unit 1441 through the CAN communication. The control signal is transmitted from the first control unit 1441 to the plurality of energy storage systems 1420 through Ethernet.

The second control unit 1442 may generate a control signal for controlling the main relay 1443 of the backup device 1440 based on the operation instruction. The main relay 1443 receives the control signal and changes its state. For instance, in response to the operation instruction indicating the "energy storage system usage mode," the second control unit 1442 may change the main relay 1443 to an off state to prevent power from being supplied to the first load 1431.

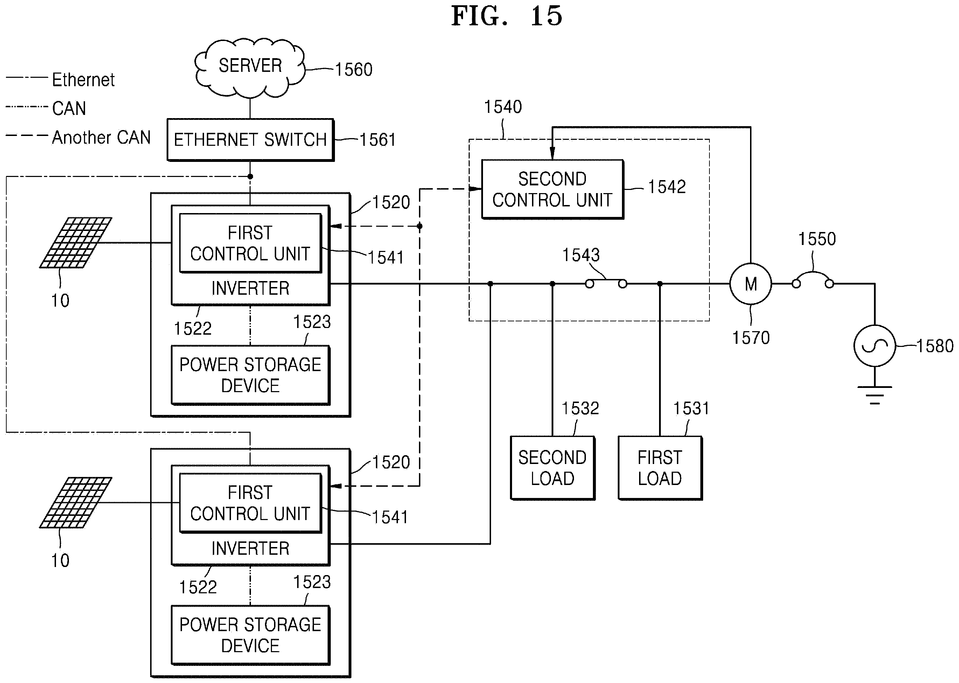

FIG. 15 is a configuration diagram related to a third communication system configuration that may be applied to the second photovoltaic system according to an embodiment of the present disclosure.

Referring to FIG. 15, the DC photovoltaic system according to an embodiment of the present disclosure may include the plurality of photovoltaic modules 10, a plurality of energy storage systems 1520, which include a plurality of inverters 1522 and a plurality of power storage devices 1523, a backup device 1540, loads 1531 and 1532, and the like.

According to an embodiment of the present disclosure, a plurality of first control units 1541 connected to a server 1560 may be respectively located in the plurality of inverters 1522. At this time, the server 1560 and the plurality of first control units 1541 may be connected in parallel using an Ethernet switch 1561.

According to an embodiment of the present disclosure, a second control unit 1542, which controls operations of the plurality of inverters 1522, may be located in the backup device 1540.

According to an embodiment of the present disclosure, the plurality of inverters 1522 and the second control unit 1542 may be connected in parallel through a communication network to transmit and receive data to and from each other. For example, the communication network may use CAN communication.

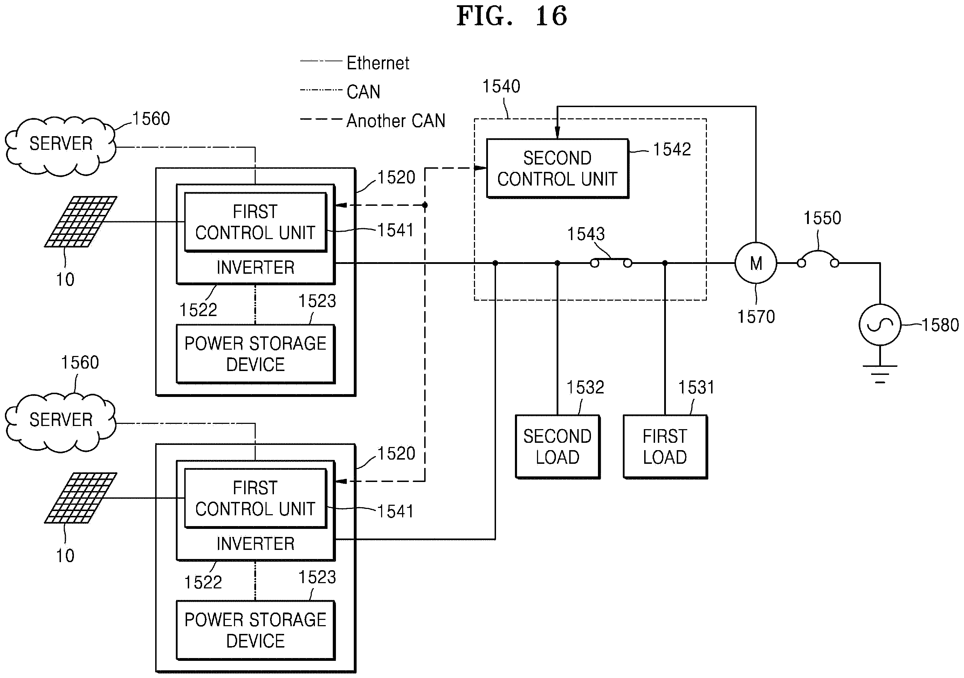

FIG. 16 is a configuration diagram related to a fourth communication system configuration that may be applied to the second photovoltaic system according to an embodiment of the present disclosure.

Referring to FIG. 16, the DC photovoltaic system according to an embodiment of the present disclosure may include the plurality of photovoltaic modules 10, the plurality of energy storage systems 1520, each of which includes the inverter 1522 and the power storage device 1523, the backup device 1540, the loads 1531 and 1532, and the like.

Unlike in FIG. 15, in the fourth communication system shown in FIG. 16, the plurality of first control units 1541 are each directly connected to a communication server 1560 through a communication network. For example, the communication network may use Ethernet.

The following includes specific embodiments related to operations of the second photovoltaic system, which includes the third communication system and the fourth communication system.

The plurality of first control units 1541 respectively included in the plurality of inverters 1522 individually collect monitoring data and log data of the photovoltaic system and transmit the collected data to the server 1560.

The server 1560, based on the monitoring data and the log data individually received from each of the first control units 1541, determines status information for each of the inverters 1522 and displays the status information to the user. In addition, the server 1560 receives operation instructions for each of the inverters 1522 from the user. The server 1560 transmits the operation instructions, which are received from the user, to each of the first control units 1541 through Ethernet. For example, the server 1560 may determine information indicating that the power output of the photovoltaic module 10 is insufficient. The server 1560 may output the information indicating that the power output is insufficient to the user. The server 1560 may receive an operation instruction from the user indicating an "energy storage system usage mode," in which power from the energy storage systems 1520 is used without using the photovoltaic modules 10. The server 1560 may transmit the received operation instruction to each of the first control units.

Each of the first control units 1541 may transmit the operation instruction received from the server 1560 to the second control unit 1542 located in the backup device 1540 through CAN communication.

The second control unit 1542 generates control signals for controlling the plurality of energy storage systems 1520 and the backup device 1540 based on the operation instructions. At this time, the generated control signals are transmitted to the plurality of energy storage systems 1520 through CAN communication.

The plurality of energy storage systems 1520 receive the control signals from the second control unit 1542 and change their operations accordingly. For example, when the second control unit 1542 receives the operation instruction indicating the "energy storage system usage mode," the second control unit 1542 may control each of the energy storage systems 1520 to convert power stored in the energy storage system 1520 and output the converted power to the load.

In addition, the backup device 1540 receives a control signal from the second control unit 1542 and changes the operation of a main relay 1543. For example, when the second control unit 1542 receives the operation instruction indicating the "energy storage system usage mode," the second control unit 1542 may change the main relay 1543 to an off state to prevent power from being supplied to a first load 1531.

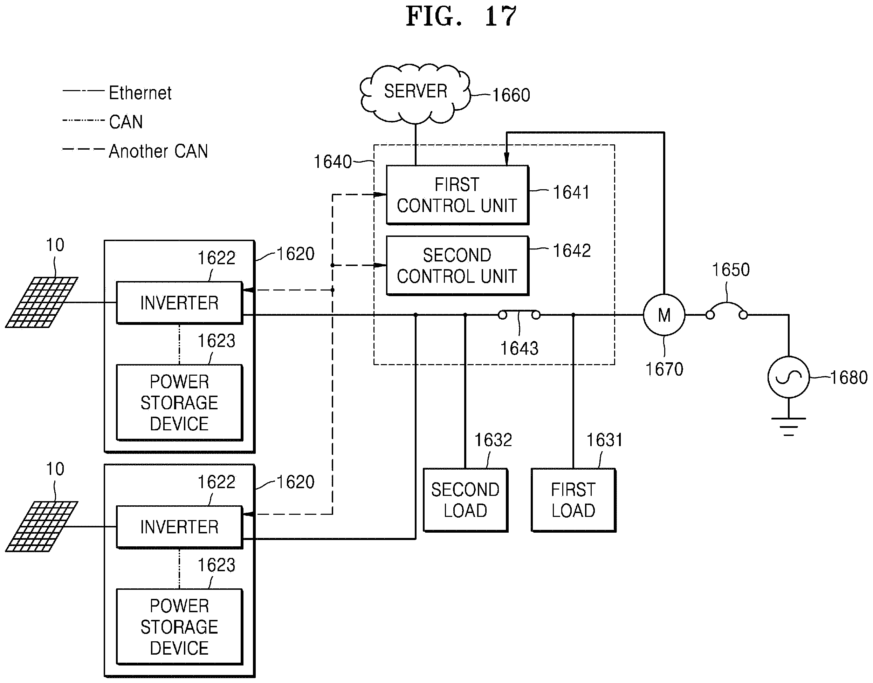

FIG. 17 is a configuration diagram related to a fifth communication system configuration that may be applied to the second photovoltaic system according to an embodiment of the present disclosure.

Referring to FIG. 17, the DC photovoltaic system according to an embodiment of the present disclosure may include the plurality of photovoltaic modules 10, a plurality of energy storage systems 1620, each of which includes an inverter 1622 and a power storage device 1623, a backup device 1640, loads 1631 and 1632, and the like.

According to an embodiment of the present disclosure, a first control unit 1641, which is connected to a server 1660, may be located in the backup device 1640. At this time, the server and the first control unit may be connected through a communication network. For example, the communication network may use Ethernet.

According to an embodiment of the present disclosure, a second control unit 1642, which controls operations of the plurality of energy storage systems 1620, may be located in the backup device 1640.

According to an embodiment of the present disclosure, the first control unit 1641 and the second control unit 1642 located in the backup device 1640 may transmit and receive data to and from each other through a communication network. For example, the communication network may use CAN communication. The data may be operation instruction data.

According to an embodiment of the present disclosure, a plurality of inverters 1622 may be connected in parallel through a communication network to the second control unit 1642 located in the backup device 1640 to transmit and receive data to and from each other. For example, the communication network may use CAN communication. The data may be control signals for controlling the energy storage systems 1620.

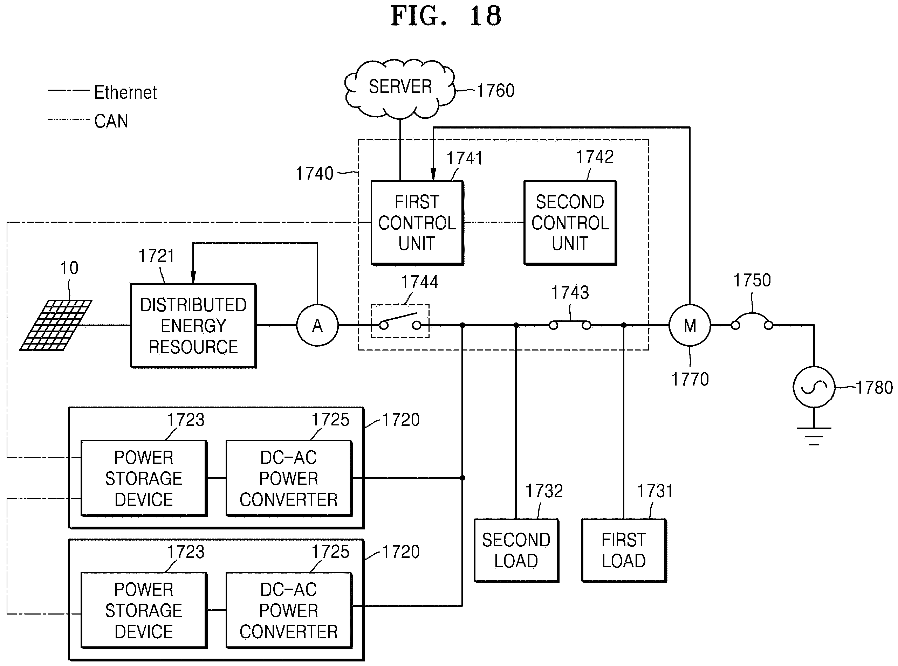

FIG. 18 is a configuration diagram related to a sixth communication system configuration that may be applied to the first photovoltaic system according to an embodiment of the present disclosure.

Referring to FIG. 18, the first photovoltaic system according to an embodiment of the present disclosure may include the plurality of photovoltaic modules 10, a plurality of energy storage systems 1720, each of which includes a distributed energy resource 1721 and a power storage device 1723, a backup device 1740, loads 1731 and 1732, and the like.

Unlike the first to fifth communication systems, in the sixth communication system, the backup device 1740 is not compatible with the distributed energy resource 1721. Accordingly, the backup device 1740 may control the plurality of energy storage systems 1720. In addition, each of the plurality of energy storage systems 1720 may further include a DC-AC power converter 1725 to supply power to the loads.

According to an embodiment of the present disclosure, a first control unit 1741, which is connected to a server 1760, may be located in the backup device 1740. At this time, the server 1760 and the first control unit 1741 may be connected through a communication network. For example, the communication network may use Ethernet.

According to an embodiment of the present disclosure, a second control unit 1742, which controls operations of the plurality of energy storage systems 1720, may be located in the backup device 1740.

According to an embodiment of the present disclosure, the first control unit 1741 and the second control unit 1742, which are located in the backup device 1740, may form a communication network. For example, the communication network may use CAN communication.

According to an embodiment of the present disclosure, the communication network may be configured so that the first control unit 1741 is connected in parallel with a plurality of energy storage systems 1720, instead of being connected to the distributed energy resources 1721, which are not compatible with the backup device 1740. For example, the communication network may use Ethernet.

The following includes specific embodiments related to operations of the photovoltaic system, which is composed of the sixth communication system.

The first control unit 1741 included in the backup device 1740 collects monitoring data and log data of the photovoltaic systems and transmits the collected data to the server 1760 through Ethernet.

The server 1760, based on the monitoring data and the log data received from the first control unit 1741, determines status information of the photovoltaic systems and displays the status information to the user. In addition, the server 1760 receives operation instructions from the user for the plurality of energy storage systems 1720. The server 1760 transmits the operation instruction received from the user to the first control unit 1741 through Ethernet. For example, the server 1760 may determine that power output of the photovoltaic module 10 is insufficient based on the data received from the first control unit 1741. The server 1760 may output the information indicating that the power output is insufficient to the user. The server 1760 may receive an operation instruction from the user indicating an "energy storage system usage mode," in which power from the energy storage systems 1720 is used. The server 1760 may transmit the received operation instruction to the first control unit 1741.

The first control unit 1741 may transmit the operation instruction received from the server 1760 to the second control unit 1742 through CAN communication.

The second control unit 1742 generates a control signal for controlling the plurality of energy storage systems 1720 based on the operation instruction. At this time, the generated control signal may be transmitted to the first control unit through CAN communication. In addition, the control signal may be transmitted from the first control unit 1741 to a plurality of power storage devices 1723 through Ethernet.

According to an embodiment of the present disclosure, the plurality of energy storage systems 1720 may receive the control signal from the second control unit 1742 and may change their operation. For example, when the second control unit 1742 receives the operation instruction for the "energy storage system usage mode," each of the energy storage systems 1720 may be controlled to convert the stored DC power into AC power and output the AC power to the loads.

According to an embodiment of the present disclosure, the DC-AC power converter 1725 may be used to charge the plurality of energy storage systems 1720 with the DC power, and output the AC power.

The second control unit 1742 generates a control signal for controlling the backup device 1740 based on the operation instruction. For example, when the second control unit 1742 receives the operation instruction indicating the "energy storage system usage mode," the second control unit 1742 may change a main relay 1743 to an off state to prevent power from being supplied to a first load 1731.

According to the present disclosure, by using an inverter or an energy storage system compatible with a backup device, and enabling the implementation of various communication networks between the backup device, the inverter, and the energy storage system, the compatibility of a photovoltaic system can be made flexible, and the efficiency and economic feasibility of the system can be improved.

In the detailed description of the present disclosure, specific embodiments have been described, but of course, various modifications are possible without departing from the scope of the present disclosure. Therefore, the scope of the present disclosure should not be limited to the described embodiments, but should be determined not only by the scope of the patent claims described later, but also by the scope of this patent claim and equivalents.

## Claims

1. A backup device comprising:
a main relay disposed between a power grid and a load and configured to perform an on- or off-operation;
a load relay disposed between an energy storage system, which is communicatively connected and controllable, and the load and
configured to perform an on- or off-operation; and
a processor configured to control the main relay and the load relay to perform the on- or off-operation based on at least one of whether the power grid is interconnected, and an available output power and a charging state of the energy storage system, and control at least one of the power grid, the energy storage system, and a distributed energy resource to supply power to the load based on the operations of the main relay and the load relay.

2. The backup device of claim 1, wherein the processor is further configured to control the main relay to perform the off-operation based on the power grid not being interconnected, and control the energy storage system to supply power to the load based on a charge amount of the energy storage system being greater than an amount of charge energy insufficient for continuous supply to the load.

3. The backup device of claim 2, wherein the processor is further configured to determine whether to limit power generation of the energy storage system based on a voltage of the load and a reference voltage of the energy storage system.

4. The backup device of claim 3, further comprising a first switch configured to selectively connect the distributed energy resource to the energy storage system,
wherein the processor is further configured to control the first switch to perform an on- or off-operation based on the voltage of the load and the reference voltage of the distributed energy resource, in response to limiting the power generation of the energy storage system.

5. The backup device of claim 2, wherein the processor is further configured to preemptively prevent an abnormal off-grid operation by stopping only a power generation operation of the energy storage system, which is dedicated to responding to the load, based on the charge amount of the energy storage system being less than or equal to the amount of charge energy insufficient for continuous supply to the load.

6. The backup device of claim 5, further comprising:
a generator; and
a second switch that is configured to connect the load to the generator and operates complementarily with the main relay,
wherein the processor is further configured to identify whether the energy storage system supports a daylight backup function, and
control the load relay to perform the off-operation and the second switch to perform the on-operation based on the daylight backup function not being supported, thereby allowing the generator to supply power to the load.

7. The backup device of claim 6, wherein the processor is further configured to identify whether the daylight backup function is performable based on the daylight backup function being supported, control the energy storage system to perform the daylight backup operation based on the backup function being performable, and control the load relay to perform the off-operation and the second switch to perform the on-operation based on the backup function not being performable, thereby allowing the generator to supply power to the load.

8. The backup device of claim 1, further comprising:
a generator; and
a second switch that is configured to connect the load to the generator and operates complementarily with the main relay,
wherein the processor is further configured to control the main relay to perform the off-operation based on the energy storage system not being connected and the power grid not being in an interconnection condition, and control the load relay to perform the off-operation and the second switch to perform the on-operation, so that the generator supplies power to the load.

9. The backup device of claim 1, wherein the processor is further configured to control so that at least one of the power grid and the distributed energy resource supplies power to the load based on the energy storage system not being connected.

10. The backup device of claim 1, wherein the load includes a first load disposed between the main relay and the power grid, and a second load disposed between the main relay and the energy storage system.

11. The backup device of claim 1, further comprising a transformer configured to adjust a magnitude of a voltage applied to the load based on the power grid not being interconnected.

12. A photovoltaic system comprising:
an energy storage system (ESS) that is communicatively connected and controllable;
at least one distributed energy resource (DER) that is optionally connected; and
a backup device configured to control a supply and backup of power to a load connected thereto,
wherein the backup device includes:
a main relay disposed between a power grid and a load and configured to perform an on- or off-operation;
a load relay disposed between the energy storage system and the load and configured to perform an on- or off-operation; and
a processor configured to control the main relay and the load relay to perform the on- or off-operation based on at least one of whether the power grid is interconnected, and an available output power and a charging state of the energy storage system, and control at least one of the power grid, the energy storage system, and the distributed energy resource to supply power to the load based on the operations of the main relay and the load relay.

13. The photovoltaic system of claim 12, wherein the processor is further configured to control the main relay to perform the off-operation based on the power grid not being interconnected, and control the energy storage system to supply power to the load based on a charge amount of the energy storage system being greater than an amount of charge energy insufficient for continuous supply to the load.

14. The photovoltaic system of claim 12, wherein the backup device further includes:
a generator; and
a second switch that is configured to connect the load to the generator and operates complementarily with the main relay, and
the processor is further configured to control the main relay to perform the off-operation based on the energy storage system not being connected and the power grid not being in an interconnection condition, and control the load relay to perform the off-operation and the second switch to perform the on-operation, so that the generator supplies power to the load.

15. The photovoltaic system of claim 12, wherein the processor is further configured to control so that at least one of the power grid and the distributed energy resource supplies power to the load based on the energy storage system not being connected.

16. The photovoltaic system of claim 12, wherein the load includes a first load disposed between the main relay and the power grid, and a second load disposed between the main relay and the energy storage system.

17. The photovoltaic system of claim 12, wherein the backup device further includes a transformer configured to adjust a magnitude of a voltage applied to the load based on the power grid not being interconnected.

18. The photovoltaic system of claim 12, wherein the energy storage system includes;
an inverter configured to convert direct current power produced by a photovoltaic module into alternating current power; and
a power storage device configured to store at least a portion of the alternating current power output from the inverter.

19. The photovoltaic system of claim 12, further comprising a sensor unit configured to determine a connection state between the load and the power grid.

20. A method of controlling a backup device, the method comprising:
controlling each of a main relay and a load relay to perform an on- or off-operation based on whether a power grid is interconnected, and an available output power and a charging state of an energy storage system, which is communicatively connected and controllable,
wherein the main relay is disposed between the power grid and the load and performs the on- or off-operation and the load relay is disposed between the energy storage system and at least one distributed energy resource, which is optionally connected, and the load and performs the on- or off-operation; and
controlling at least one of the power grid, the energy storage system, and the distributed energy resource to supply power to the load based on the operations of the main relay and the load relay.
